# EUROPEAN PATENT APPLICATION

(11) **EP 4 814 642 A1**
(43) Date of publication of application: **30.09.2026**
(21) Application number: 26160829.3
(22) Date of filing: 26.02.2026
(51) Int. Cl.: G05D 1/247, G05D 1/248, G05D 1/648

(54) **WORK MACHINE, PROGRAM, AND SYSTEM**

(30) Priority: 26.03.2025 JP 2025051653
(71) Applicant: HONDA MOTOR CO., LTD., Tokyo 105-8404 (JP)
(72) Inventor: FURUTA, Sotaro, Tokyo, 1058404 (JP); KAMEYAMA, Naoki, Tokyo, 1058404 (JP); KAWAKAMI, Toshiaki, Tokyo, 1058404 (JP)
(74) Representative: Kiwit, Benedikt

(57) **Abstract**

A work machine that autonomously travels in a work area in a plurality of travel modes to perform work, the work machine includes: a first detector; a second detector; and a processor configured to control autonomous travel and work of the work machine. The processor is configured to recognize a first area in the work area based on a detection result of the first detector and recognize a second area in the work area based on a detection result of the second detector, the second area is an area set to include an overlapping area partially overlapping the first area, and the processor is configured to cause the travel modes transition when the work machine moves between an outside and an inside of the second area.

## Description

### TECHNICAL FIELD

The present disclosure relates to a work machine that autonomously travels in a work area in a plurality of travel modes to perform work, a program, and a system.

### BACKGROUND ART

JP2016-186751A describes a work vehicle that autonomously travels in a work area delineated by laying a boundary wire and performs work such as lawn mowing. The work vehicle includes a magnetic sensor and detects a magnetic field generated from the boundary wire through which a current flows.

WO2019/167203 describes a work machine that estimates a self-position based on a global positioning system (GPS) signal and autonomously travels and works in a work area.

### SUMMARY OF INVENTION

When the entire work area is delineated by the boundary wire, the time and effort for installation, maintenance, and the like of the boundary wire are enormous. The positioning based on the global navigation satellite system (GNSS) technology including GPS does not require such time and effort, but positioning accuracy may vary depending on a reception state of a GNSS signal, and thus there is room for improvement in ascertaining a self-position in the work area.

Aspects of the present disclosure relate to a work machine, a program, and a system capable of ascertaining a self-position in a work area with high reliability.

According to an aspect of the present disclosure, there is provided a work machine that autonomously travels in a work area in a plurality of travel modes to perform work, the work machine including:
a first detector;
a second detector; and
a processor configured to control autonomous travel and work of the work machine, in which
the processor is configured to recognize a first area in the work area based on a detection result of the first detector and recognize a second area in the work area based on a detection result of the second detector,
the second area is an area set to include an overlapping area partially overlapping the first area, and
the processor is configured to cause the travel modes transition when the work machine moves between an outside and an inside of the second area.

According to another aspect of the present disclosure, there is provided a program for causing a work machine to execute a process, the work machine including a first detector and a second detector to autonomously travel in a work area in a plurality of travel modes to perform work, the work machine configured to recognize a first area in the work area based on a detection result of the first detector and to recognize at least one second area in the work area based on a detection result of the second detector, the second area being an area set to include an overlapping area partially overlapping the first area, the process including:
causing the travel modes to transition when the work machine moves between an outside and an inside of the second area.

According to another aspect of the present disclosure, there is provided a system including:
a work machine configured to autonomously travel in a work area to perform work; and
at least one area demarcator configured to demarcate a part of the work area, in which
the work machine includes a first detector configured to receive a GNSS signal, a second detector configured to detect a signal emitted by the at least one area demarcators, and a processor configured to control autonomous travel and work of the work machine, and
the at least one area demarcator is installed to demarcate an area including an area in the work area in which the GNSS signal is difficult to be received by the first detector and a part of an area in the work area in which the GNSS signal is receivable by the first detector.

According to the aspects of the present disclosure, it is possible to ascertain the self-position in the work area with high reliability.

### BRIEF DESCRIPTION OF DRAWINGS

Exemplary embodiment(s) of the present invention will be described in detail based on the following figures, wherein:
Fig. 1 is a schematic configuration diagram of a work machine according to an embodiment of the present disclosure;
Fig. 2 is a schematic top view of the work machine;
Fig. 3 is a block diagram illustrating a functional configuration of a controller and a sensor group;
Fig. 4A illustrates a state in which the work machine is traveling in a predetermined work area in a parallel travel mode,
Fig. 4B illustrates a state in which the work machine is traveling in the work area in a random travel mode;
Fig. 5 illustrates a work area including a wireless area and a wire area;
Fig. 6 is a flowchart illustrating an example of processing executed by a processor when the wire area is detected while the work machine is traveling in a non-overlapping area of the wireless area in the parallel travel mode;
Fig. 7 is a continuation of the flowchart of Fig. 6;
Fig. 8 illustrates a state in which the work machine travels in the non-overlapping area of the wireless area in the parallel travel mode;
Fig. 9 illustrates a state in which the work machine travels along an outer peripheral edge of the wire area;
Fig. 10 illustrates a state in which the work machine performs work in the wire area for a scheduled work time in the random travel mode;
Fig. 11 illustrates a state in which the work machine moves from an overlapping area to an outside of the wire area after the scheduled work time has elapsed;
Fig. 12 illustrates a state in which the work machine moves from a non-overlapping area of the wire area to the outside of the wire area after the scheduled work time has elapsed;
Fig. 13 is a flowchart illustrating an example of processing executed by the processor when the wire area is detected while the work machine is traveling in the non-overlapping area of the wireless area in the random travel mode;
Fig. 14 illustrates a state in which the work machine travels in the work area in the random travel mode;
Fig. 15 illustrates a state in which the work machine stops the work and returns to a charging station when the work machine is working in the non-overlapping area of the wire area; and
Fig. 16 illustrates a work area in which two boundary wires are installed.

### DESCRIPTION OF EMBODIMENTS

Hereinafter, an embodiment of a work machine, a program, and a system in the present disclosure will be described with reference to the accompanying drawings.

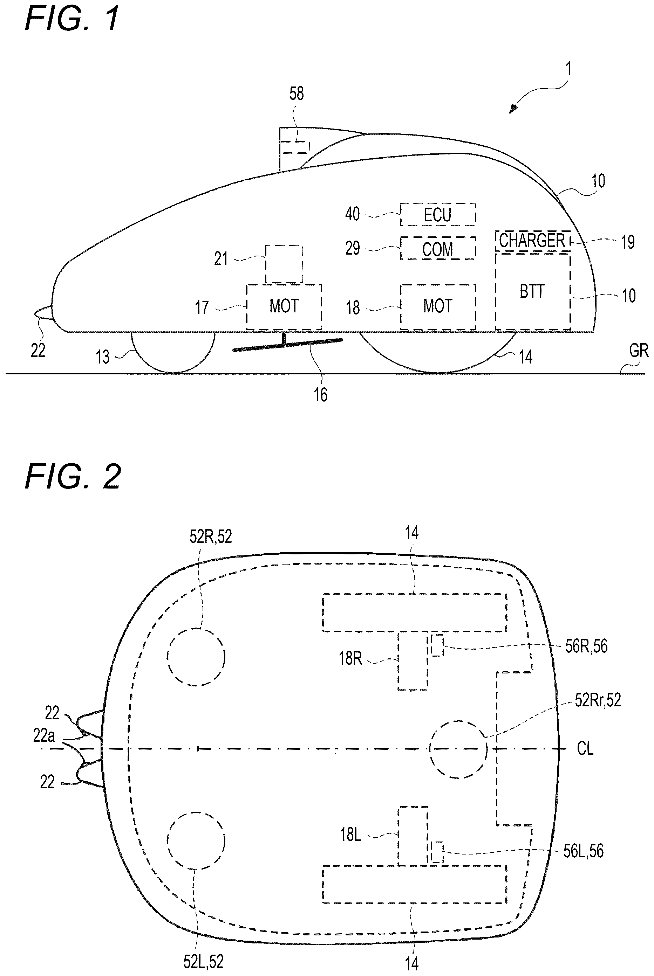

As illustrated in Figs. 1 and 2, a work machine 1 includes a vehicle body 10 having a chassis and a frame, and a pair of left and right front wheels 13 and a pair of left and right rear wheels 14 that support the vehicle body 10 above a ground surface GR so as to be capable of travel. The work machine 1 has, for example, the weight and dimensions that allow the work machine 1 to be carried by a user. In the present embodiment, an example will be described in which the work machine 1 is a lawn mower that performs lawn mowing work, but the work machine 1 may be a machine that performs various types of work, such as a snowplow, a cultivator, or a rice transplanter.

The work machine 1 includes, for example, a work unit 16, a work motor 17 for driving the work unit, a travel motor 18 for driving rear wheels, a charging unit 19, a battery 20, a communication device 29, and a controller 40.

The work unit 16 includes a rotor and a blade for lawn mowing attached to the rotor and has a substantially disk-like shape as a whole. A rotating shaft is installed vertically at the center of the rotor and the work unit 16 is configured to enable adjustment of a height of the blade above the ground surface GR through a height regulating mechanism 21. The height regulating mechanism 21 includes, for example, a screw that can be operated by a user's operation or under the control of the controller 40. The work motor 17 is disposed above the work unit 16, has an output shaft connected to the rotating shaft of the rotor of the work unit 16, and rotationally drives the blade integrally with the rotor.

The travel motor 18 includes a pair of travel motors 18L and 18R installed on the right and left inner sides of the left and right rear wheels 14. Output shafts of the travel motors 18L and 18R are connected to the rotating shaft of the left and right rear wheels 14, respectively, and the travel motors 18L and 18R rotationally drive the left and right rear wheels 14 independently of each other. That is, the work machine 1 includes the front wheels 13 as driven wheels and the rear wheels 14 as driving wheels, and the travel motors 18L and 18R each independently rotate one of the left and right rear wheels 14 normally (rotation to move forward) or reversely (rotation to move reverse). By establishing a difference between the rotation speeds of the left and right rear wheels 14, the work machine 1 can turn in any direction.

For example, when the left and right rear wheels 14 are both rotated normally and the rotation speed of the right rear wheel 14 is greater than the rotation speed of the left rear wheel 14, the work machine 1 turns left at a turning angle in accordance with the speed difference. Conversely, when the rotation speed of the left rear wheel 14 is greater than the rotation speed of the right rear wheel 14, the work machine 1 turns right at a turning angle in accordance with the speed difference. When one of the left and right rear wheels 14 is rotated normally and the other reversely both at the same speed, the work machine 1 turns on a spot.

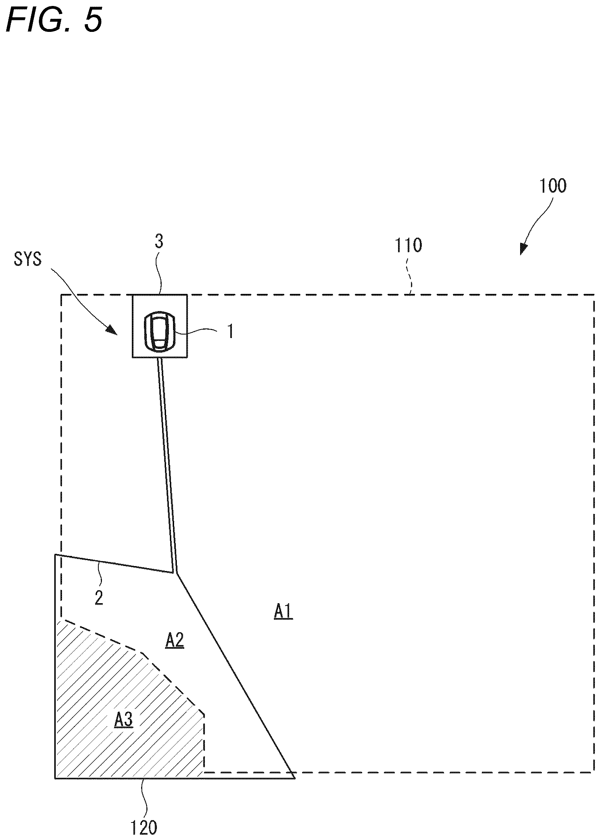

The charging unit 19 includes an AC/DC converter, is connected to terminals 22 provided at a front end of the vehicle body 10 by wires, and is connected to the battery 20 by wires. The terminals 22 have contacts 22a, and the battery 20 can be charged by connecting the terminals 22 to the charging station 3 (see Fig. 5) through the contacts 22a. The battery 20 is connected to the work motor 17 and the travel motor 18 by wires, and the work motor 17 and the travel motor 18 are driven by power supplied from the battery 20 via a driver.

The communication device 29 is a communication interface that communicates with the outside of the work machine 1 under the control of the controller 40. The communication device 29 can perform wireless communication via a mobile communication network such as "4G" or "5G" or short-range wireless communication such as Bluetooth (registered trademark) or Wi-Fi (registered trademark).

The work machine 1 is provided with a plurality of magnetic sensors 52. In the present embodiment, the magnetic sensor 52 includes a pair of left and right magnetic sensors 52L and 52R provided at a front portion and spaced apart from each other in a left-right direction, and a magnetic sensor 52Rr provided at a rear portion and at a central portion in the left-right direction, that is, three magnetic sensors 52 are provided in the work machine 1. The pair of left and right magnetic sensors 52L and 52R are installed laterally symmetrically with respect to a center line CL running in a straight forward direction along a center of the work machine 1 in a vehicle width direction.

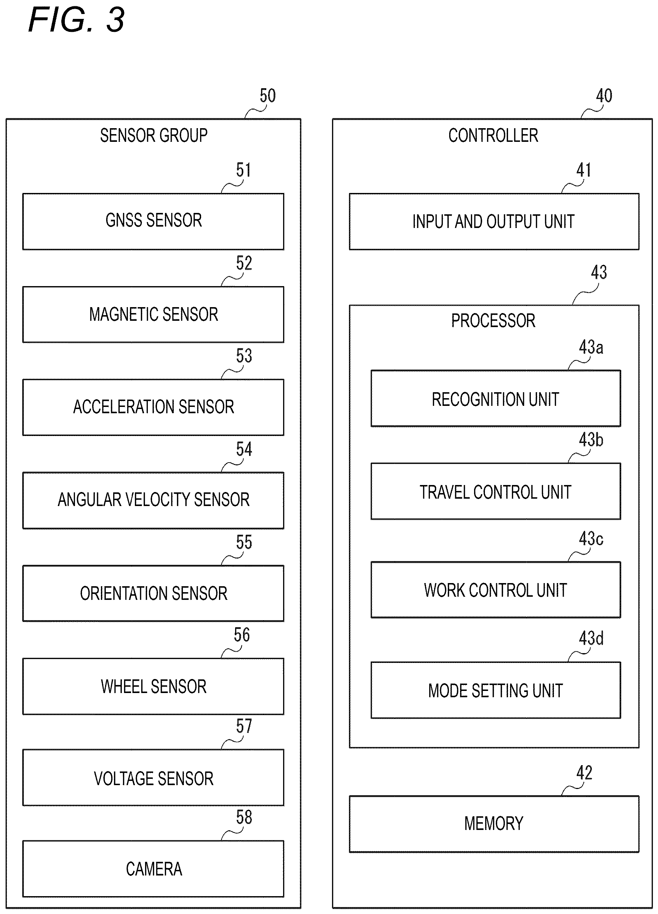

Fig. 3 is a block diagram illustrating a functional configuration of the controller 40 and a sensor group 50. The sensor group 50 includes a plurality of sensors mounted on the work machine 1, and includes, for example, a GNSS sensor 51, the magnetic sensor 52, an acceleration sensor 53, an angular velocity sensor 54, an orientation sensor 55, a pair of left and right wheel sensors 56 (56L and 56R), a voltage sensor 57, and a camera 58 (image sensor).

The GNSS sensor 51 includes an antenna that receives a radio wave (GNSS signal) transmitted from a base station or a positioning satellite, and detects position information including the latitude and longitude of the work machine 1. The magnetic sensor 52 outputs a signal indicating the magnitude of the magnetic field (magnetic field strength). The acceleration sensor 53 outputs a signal indicating acceleration in directions of three orthogonal axes (X-axis, Y-axis, and Z-axis) acting on the work machine 1. The angular velocity sensor 54 outputs a signal indicating an angular velocity (yaw rate) generated around an axis (Z-axis) in a height direction of the work machine 1, and can detect a turning angle of the work machine 1 around the Z-axis based on the signal from the angular velocity sensor 54. The orientation sensor 55 is a geomagnetic sensor having a two-axis or three-axis structure that outputs a signal corresponding to geomagnetism, and can detect an orientation of the work machine 1 with respect to a predetermined orientation (for example, north) based on the signal from the orientation sensor 55. The wheel sensors 56 (56L and 56R) output signals indicating wheel speeds and rotational speeds of the left and right rear wheels 14, respectively, and a travel distance of the work machine 1 can be calculated based on the signals from the wheel sensors 56. The voltage sensor 57 detects a residual voltage of the battery 20. The camera 58 captures an image of an external environment of the work machine 1 including at least the front. A plurality of cameras 58 may be mounted on the work machine 1.

The controller 40 is, for example, an electronic control unit (ECU) including a microcomputer configured on a circuit board. The controller 40 controls traveling, work, and the like of the work machine 1 based on various detection values detected by the sensor group 50. The controller 40 includes, for example, an input and output unit 41, a memory 42, and a processor 43.

The memory 42 functions as a storage unit and includes a read-only memory (ROM), a random access memory (RAM), and the like. The memory 42 stores a program or the like for controlling autonomous traveling and work (here, lawn mowing) of the work machine 1. The processor 43 functions as a recognition unit 43a, a travel control unit 43b, a work control unit 43c, and a mode setting unit 43d by reading and executing the program stored in the memory 42. The functional configuration of the processor 43 will be described later.

Next, the travel mode of the work machine 1 will be described. The travel mode of the work machine 1 includes, for example, a parallel travel mode and a random travel mode. The travel mode is set by the user, for example. The travel mode may be set by the processor 43 freely or according to a specific situation.

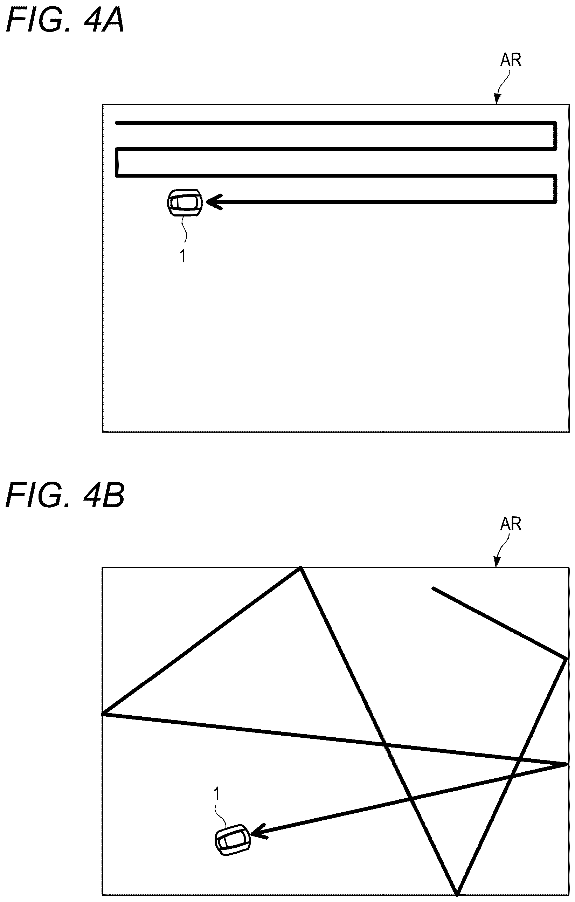

Fig. 4A illustrates a state in which the work machine 1 is traveling in a work area AR in the parallel travel mode. The parallel travel mode is a mode in which the work machine 1 is caused to travel regularly while repeating straight traveling and turning by 180 degrees such that a plurality of parallel paths are arranged without a gap or with a predetermined gap. The paths in the parallel travel mode are predetermined before the work is started. When the work machine 1 travels in the parallel travel mode and performs work (lawn mowing), a grain direction in the work area AR becomes one direction (left-right direction in Fig. 4A). Therefore, it is possible to form the grain with excellent appearance.

Fig. 4B illustrates a state in which the work machine 1 is traveling in the work area AR in the random travel mode. The random travel mode is a mode in which the work machine 1 is caused to randomly travel straight in the work area AR, and when the work machine 1 reaches a boundary of the work area AR, the work machine 1 is caused to turn toward the inside of the work area AR at a predetermined angle less than 180 degrees and travel while changing a traveling direction.

The parallel travel mode is a mode in which the work machine 1 can travel under an environment in which the work machine 1 can receive a GNSS signal and estimate a self-position in the work area AR. On the other hand, the random travel mode is a mode in which the work machine 1 can travel even if it is difficult to receive the GNSS signal under an environment in which the boundary (outer peripheral edge) of the work area AR can be recognized. The environment in which the boundary (outer peripheral edge) of the work area AR can be recognized is, for example, an environment in which the work area AR is delineated by a boundary wire 2 to be described later and the work machine 1 can detect the boundary wire 2 (boundary of the work area AR).

Next, the work area will be described. Fig. 5 illustrates an example of the work area 100. The work area 100 is, for example, a garden or a park in which lawn is grown, and is demarcated in advance by the user of the work machine 1. The charging station 3 for charging the battery 20 of the work machine 1 is installed in the work area 100.

The work area 100 includes an area (also referred to as a wireless area 110) in which the work machine 1 can receive the GNSS signal. In Fig. 5, the wireless area 110 is indicated by a broken line. The work machine 1 stores map information on the wireless area 110 in the memory 42 in advance, and the processor 43 can estimate the self-position in the wireless area 110 based on the GNSS signal received by the GNSS sensor 51. Therefore, the work machine 1 can perform autonomous traveling and work in the wireless area 110 based on a detection result of the GNSS sensor 51.

The work area 100 also includes an area (hatched area in Fig. 5) where reception sensitivity of the GNSS signal is lower than reception sensitivity of the wireless area 110 due to, for example, the influence of a surrounding building or the like and it is difficult to receive the GNSS signal. This area is an area outside the wireless area 110, and since it is difficult for the processor 43 to recognize this area by the GNSS sensor 51, it is necessary to recognize this area by another means.

Therefore, the boundary wire 2 is installed on the ground surface GR to include the area where it is difficult to receive the GNSS signal. The symbol SYS in Fig. 5 denotes a system SYS including the work machine 1 and the boundary wire 2.

Specifically, the boundary wire 2 is installed by being buried at a predetermined depth from the ground surface GR. An area demarcated by the boundary wire 2 is also referred to as a wire area 120. In Fig. 5, the wire area 120 is indicated by a solid line. The work area 100 is an area including the wireless area 110 and the wire area 120. The boundary wire 2 extends from the charging station 3, demarcates the wire area 120, and then returns to the charging station 3. A current flows through the boundary wire 2, and a magnetic field is generated near the boundary wire 2. The work machine 1 detects the magnetic field with the magnetic sensor 52. A signal indicating magnetic field strength detected by the magnetic sensor 52 has, for example, a positive value inside the wire area 120 and a negative value outside the wire area 120, and is zero on the boundary wire 2. The work machine 1 can recognize the wire area 120 based on a detection result of the magnetic sensor 52 and perform autonomous traveling and work in the wireless area 110.

In this way, by using both the GNSS signal and the boundary wire 2, the work machine 1 can travel and work in the entire work area 100 including an area where the GNSS signal cannot be received. Further, as compared with the case where the entire work area 100 is demarcated by the boundary wire 2, it is possible to reduce time and effort for installation, maintenance, and the like of the boundary wire 2.

Here, the recognition unit 43a, the travel control unit 43b, the work control unit 43c, and the mode setting unit 43d, which are the functional configurations of the processor 43 described above, will be described.

The recognition unit 43a recognizes the work area 100 based on the detection results of the GNSS sensor 51 and the magnetic sensor 52. Specifically, the recognition unit 43a estimates the self-position with the GNSS sensor 51 and recognizes the wireless area 110 as an area for work. In addition, the recognition unit 43a detects the boundary wire 2 demarcating the wire area 120 by the magnetic sensor 52, and recognizes the wire area 120 as an area for work.

For example, the travel control unit 43b outputs a control signal to the travel motor 18 based on the set travel mode to control the travel of the work machine 1 in the work area 100. For example, when the work machine 1 reaches the boundary of the work area 100, the travel control unit 43b controls the travel motor 18 to generate a speed difference in the rotation of the left and right rear wheels 14, thereby turning the work machine 1.

For example, the work control unit 43c outputs a control signal to the work motor 17 to rotationally drive the work motor 17. Further, the work control unit 43c controls the height regulating mechanism 21 to adjust the height of the blade from the ground surface GR.

The mode setting unit 43d sets the travel mode described above. Although details will be described later, the mode setting unit 43d switches the travel mode when the work machine 1 moves between the outside and the inside of the wire area 120.

Returning to Fig. 5, in the present embodiment, the boundary wire 2 is installed such that a part of the wire area 120 overlaps the wireless area 110. Hereinafter, an area where the wireless area 110 and the wire area 120 overlap is also referred to as an overlapping area A2. An area of the wireless area 110 that does not overlap the wire area 120 is also referred to as a non-overlapping area A1. An area of the wire area 120 that does not overlap the wireless area 110 is also referred to as a non-overlapping area A3. In other words, the wireless area 110 includes the non-overlapping area A1 and the overlapping area A2, and the wire area 120 includes the overlapping area A2 and the non-overlapping area A3.

Since the wire area 120 is set to partially overlap the wireless area 110, for example, even when the work machine 1 moves between the wireless area 110 and the wire area 120, the detection result of at least one of the GNSS sensor 51 and the magnetic sensor 52 is always acquired. In the system SYS including the work machine 1 and the boundary wire 2, the processor 43 can stably recognize the entire work area 100, and the work machine 1 can ascertain the self-position with high reliability.

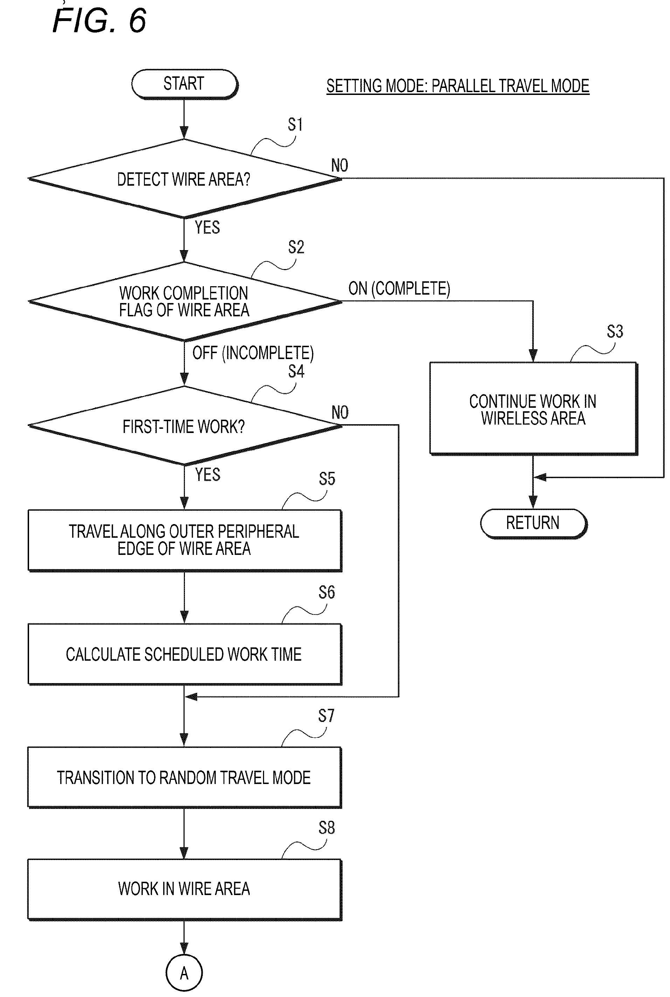

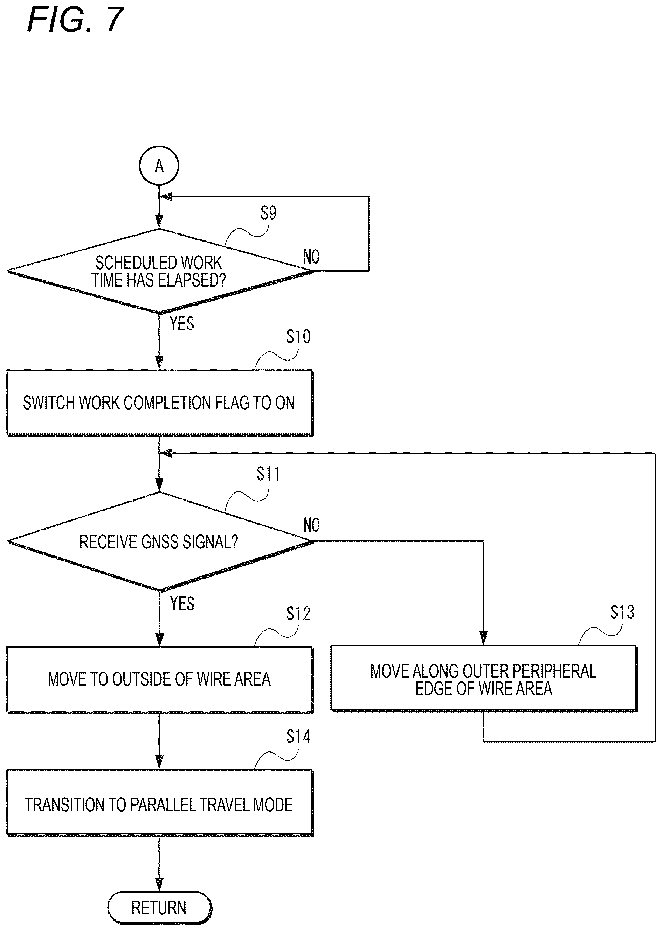

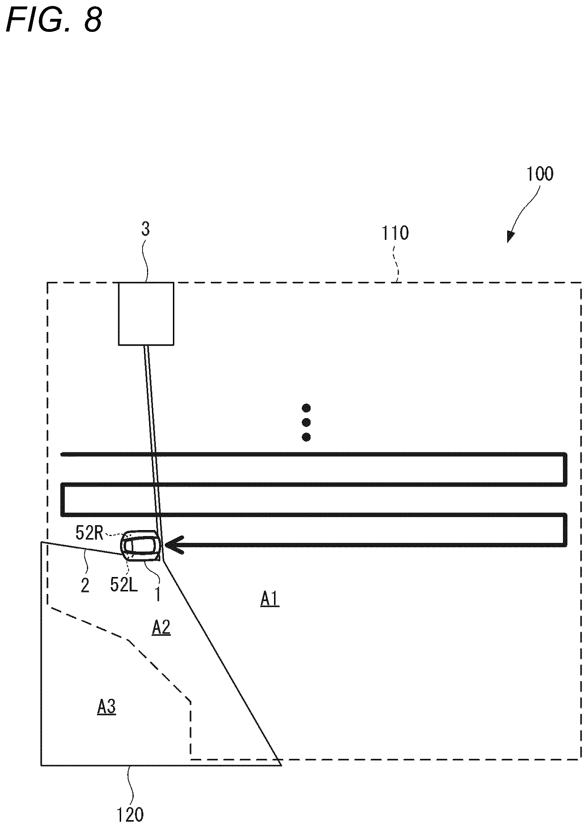

Figs. 6 and 7 are flowcharts illustrating an example of processing executed by the processor 43 when the parallel travel mode is set as the travel mode and the work machine 1 is traveling in the non-overlapping area A1 of the wireless area 110 in the parallel travel mode. Hereinafter, various types of processing of the flowchart will be described with reference to Figs. 8 to 12.

The processor 43 monitors an output of the magnetic sensor 52 and determines whether the wire area 120 is detected while the work machine 1 is traveling in the non-overlapping area A1 of the wireless area 110 in the parallel travel mode as illustrated in Fig. 8 (step S1).

If the wire area 120 is detected (step S1: YES), the processor 43 determines whether a work completion flag of the wire area 120 is ON/OFF (step S2). The work completion flag is ON when the work in the wire area 120 has already been completed, and is OFF when the work in the wire area 120 has not been completed. If the work completion flag is ON in step S2 (step S2: ON), the work machine 1 does not enter the wire area 120 and continues the work in the wireless area 110 (step S3).

If the work completion flag is OFF in step S2 (step S2: OFF), the work in the wire area 120 has not been completed, and thus the work in the wire area 120 is required. The processor 43 determines whether the work in the wire area 120 is first-time work (step S4).

If the work in the wire area 120 is not the first-time work (step S4: NO), the processor 43 transitions the travel mode from the parallel travel mode to the random travel mode (step S7).

If the work in the wire area 120 is the first-time work (step S4: YES), the processor 43 allows the work machine 1 to travel along the outer peripheral edge of the wire area 120 (step S5), and calculates a scheduled work time required for the work in the wire area 120 (step S6).

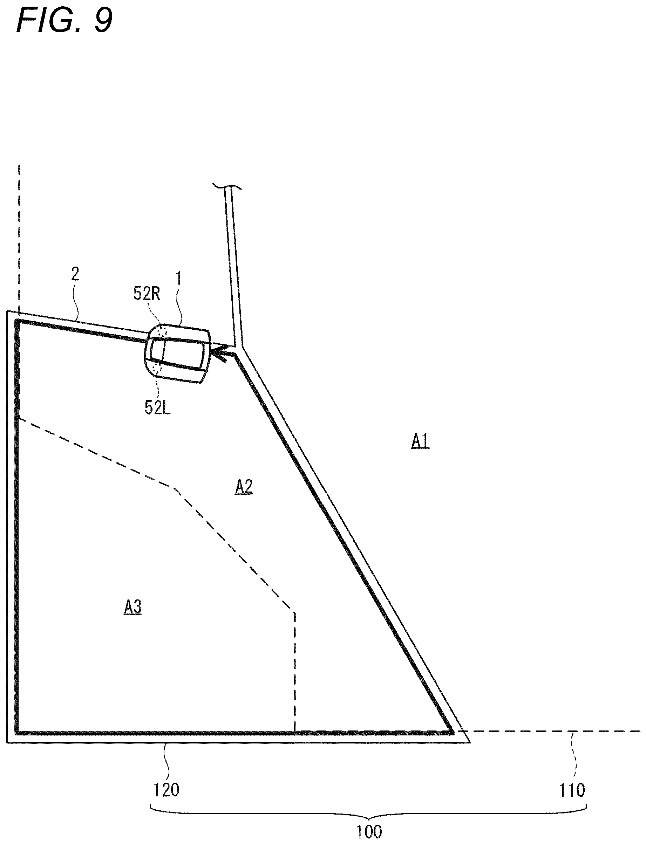

Steps S5 and S6 will be described in detail with reference to Fig. 9. In step S5, the processor 43 allows the work machine 1 to travel around the outer peripheral edge of the wire area 120 such that one magnetic sensor (for example, 52L) of the magnetic sensors 52L and 52R is positioned inside the boundary wire 2 and the other magnetic sensor (for example, 52R) travels on the boundary wire 2 in a direction (counterclockwise direction) indicated by a thick arrow. That is, the processor 43 monitors an output of the magnetic sensor 52R and controls the travel motors 18L and 18R so that the magnetic field strength detected by the magnetic sensor 52R becomes zero. For example, when the magnetic field strength detected by the magnetic sensor 52R becomes positive, the right travel motor 18R is decelerated and the left travel motor 18L is accelerated, and the work machine 1 is turned to the right. On the other hand, when the magnetic field strength detected by the magnetic sensor 52R becomes negative, the right travel motor 18R is accelerated, the left travel motor 18L is decelerated, and the work machine 1 is turned to the left. Accordingly, the magnetic sensor 52R is brought close to the boundary wire 2, and the magnetic field strength detected by the magnetic sensor 52R is maintained at zero.

In step S6, the processor 43 calculates the scheduled work time in the wire area 120 based on, for example, a travel distance when the work machine 1 travels around the outer peripheral edge of the wire area 120. The travel distance of the work machine 1 is calculated based on, for example, a diameter of the rear wheel 14 and a rotational speed detected by the wheel sensor 56. The processor 43 stores the calculated scheduled work time in the memory 42 in association with the wire area 120. In this way, the processor 43 can calculate the scheduled work time related to a size of the wire area 120 before the work in the wire area 120.

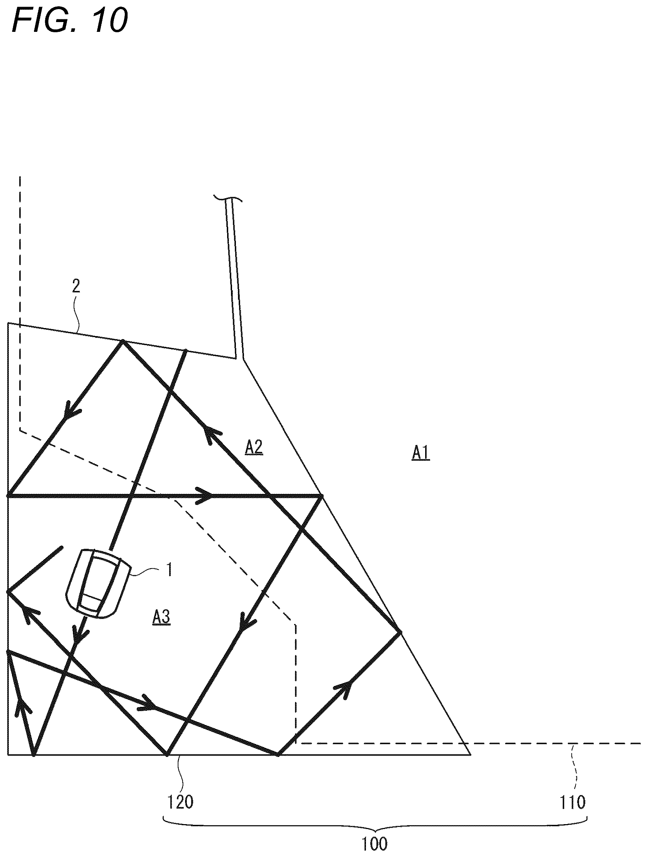

After calculating the scheduled work time, the processor 43 transitions the travel mode from the parallel travel mode to the random travel mode (step S7). Then, as illustrated in Fig. 10, the processor 43 allows the work machine 1 to travel and work for the scheduled work time in the wire area 120 (overlapping area A2 and non-overlapping area A3) in the random travel mode (step S8). In this way, the processor 43 can appropriately perform the work in the wire area 120 based on the scheduled work time calculated by traveling along the outer peripheral edge of the wire area 120.

During the work in the wire area 120, the processor 43 monitors whether the scheduled work time has elapsed (step S9). After the scheduled work time has elapsed (step S9: YES), the processor 43 switches the work completion flag of the wire area 120 to ON (step S10), and determines whether the GNSS signal is received by the GNSS sensor 51 at a position of the work machine 1 (that is, a work completion position) when the scheduled work time has elapsed (step S11).

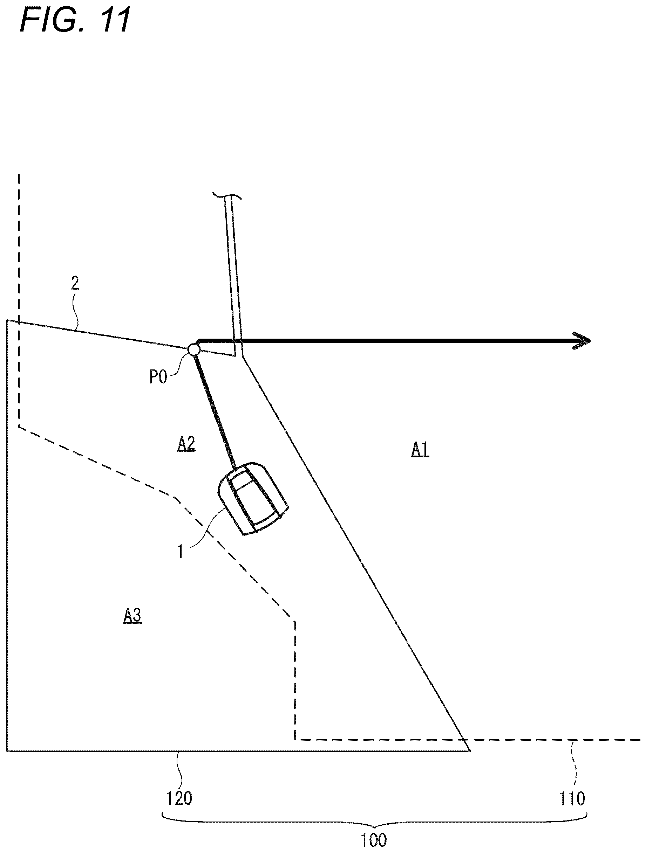

As illustrated in Fig. 11, when the work completion position of the work machine 1 is in the overlapping area A2, the GNSS sensor 51 receives the GNSS signal (step S11: YES). In this case, the processor 43 permits the work machine 1 to move from the overlapping area A2 to the non-overlapping area A1 of the wireless area 110. Specifically, the processor 43 moves the work machine 1 to an entry position P0 based on the GNSS signal. The entry position P0 is a position at which the wire area 120 is detected in step S1, and is a position at the time of entry into the wire area 120. Thereafter, the processor 43 moves the work machine 1 from the entry position P0 to the outside of the wire area 120 (that is, the non-overlapping area A1 of the wireless area 110) (step S12), and transitions the travel mode from the random travel mode to the parallel travel mode (step S14). Accordingly, the work machine 1 travels and performs the work again in the non-overlapping area A1 of the wireless area 110 in the parallel travel mode.

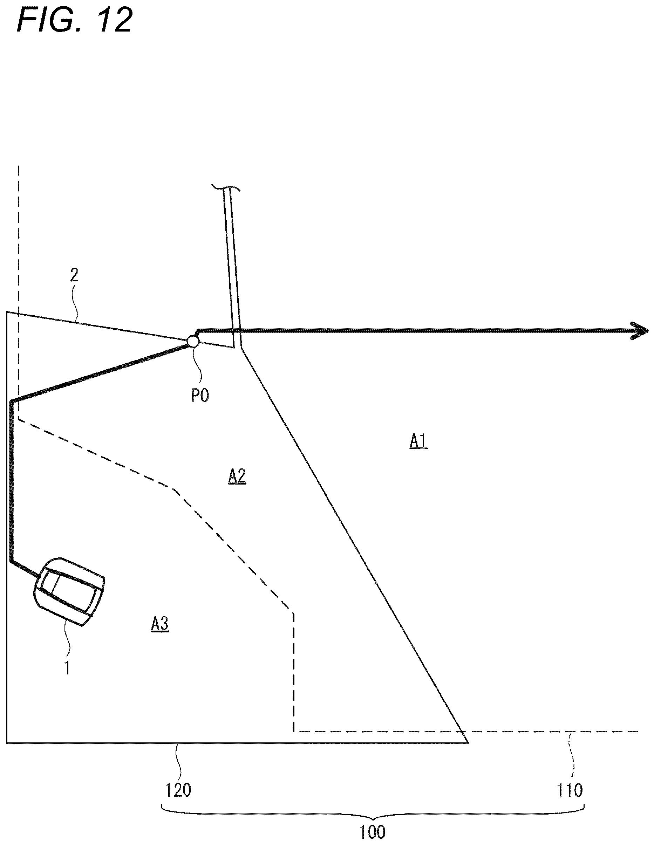

As illustrated in Fig. 12, when the work completion position of the work machine 1 is in the non-overlapping area A3 of the wire area 120, the GNSS sensor 51 does not receive the GNSS signal (step S11: NO). In this case, the processor 43 moves the work machine 1 to the outer peripheral edge of the wire area 120 and allows the work machine 1 to travel along the outer peripheral edge of the wire area 120 after reaching the outer peripheral edge (step S13). The processor 43 allows the work machine 1 to travel along the outer peripheral edge of the wire area 120 until the GNSS sensor 51 can receive the GNSS signal. When the GNSS sensor 51 receives the GNSS signal, the processor 43 moves the work machine 1 to the entry position P0 based on the GNSS signal. Thereafter, the processor 43 moves the work machine 1 from the entry position P0 to the outside of the wire area 120 (step S12), and transitions the travel mode from the random travel mode to the parallel travel mode (step S14). In this way, even in a case where the work machine 1 is located in the non-overlapping area A3 of the wire area 120 when the scheduled work time has elapsed, the work machine 1 can be appropriately moved to the non-overlapping area A1 of the wireless area 110.

As described above, in the case where the parallel travel mode is set as the travel mode, the processor 43 transitions the travel mode to the random travel mode when the work machine 1 moves from the wireless area 110 to the inside (overlapping area A2) of the wire area 120, and transitions the travel mode to the parallel travel mode when the work machine 1 moves to the outside (non-overlapping area A1) of the wire area 120. In this way, the work machine 1 can smoothly transition the travel mode in accordance with the area recognition by the GNSS sensor 51 and the area recognition by the magnetic sensor 52.

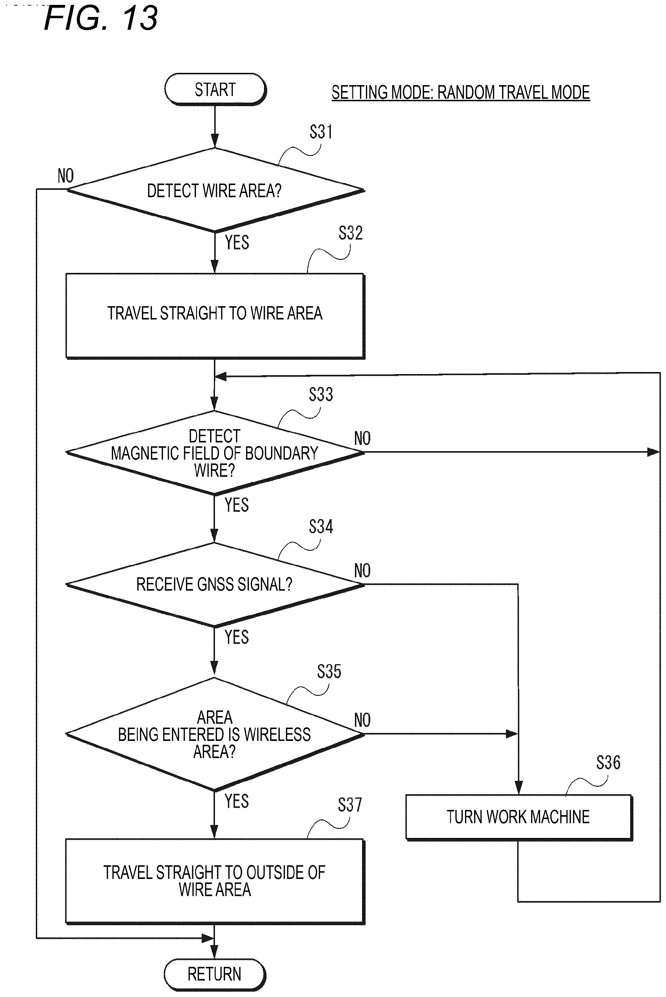

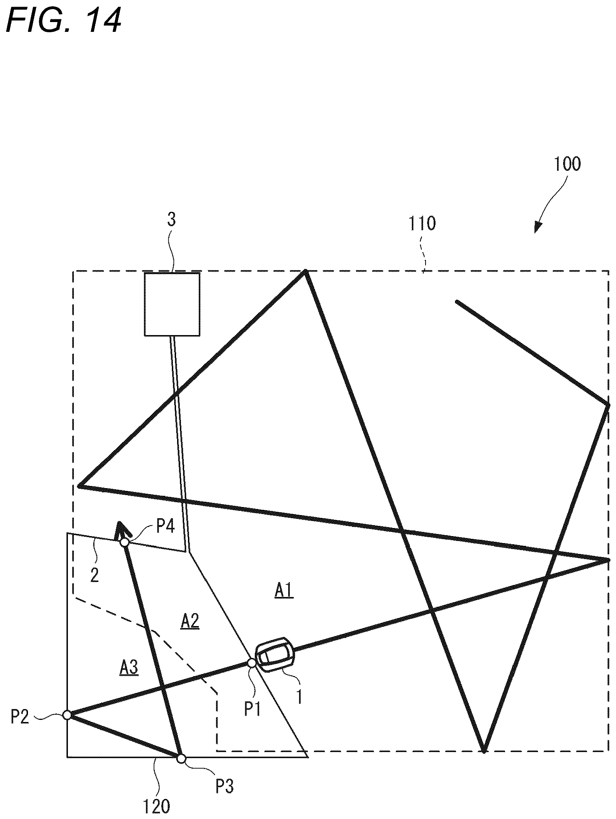

Fig. 13 is a flowchart illustrating an example of processing executed by the processor 43 when the random travel mode is set as the travel mode and the work machine 1 is traveling in the non-overlapping area A1 of the wireless area 110 in the random travel mode. Hereinafter, various kinds of processing of the flowchart will be described with reference to Fig. 14.

The processor 43 monitors the output of the magnetic sensor 52 and determines whether the wire area 120 is detected while the work machine 1 is traveling in the non-overlapping area A1 of the wireless area 110 in the random travel mode as illustrated in Fig. 14 (step S31).

If the wire area 120 is detected (step S31: YES), the processor 43 allows the work machine 1 to travel straight to the wire area 120 (step S32). Specifically, in Fig. 14, when the work machine 1 traveling straight in the non-overlapping area A1 of the wireless area 110 detects the wire area 120 at a position P1, the processor 43 allows the work machine 1 to travel straight as it is and enter the wire area 120. While the work machine 1 is traveling in the wire area 120, the processor 43 monitors the output of the magnetic sensor 52 and determines whether the magnetic field of the boundary wire 2 is detected (step S33).

If the magnetic field of the boundary wire 2 is detected (step S33: YES), the processor 43 determines whether the GNSS sensor 51 receives the GNSS signal (step S34). If the GNSS signal is not received (step S34: NO), the work machine 1 is located in the non-overlapping area A3 of the wire area 120, and the processor 43 turns the work machine 1 (step S36). Specifically, in Fig. 14, when the work machine 1 traveling straight in the non-overlapping area A3 detects the boundary wire 2 at a position P2, the GNSS sensor 51 does not receive the GNSS signal at the position P2, and thus the processor 43 allows the work machine 1 to turn and continuously travel in the non-overlapping area A3 of the wire area 120. The processor 43 executes the same processing when the work machine 1 is located at a position P3.

If the magnetic field of the boundary wire 2 is detected and the GNSS signal is received (step S33: YES, step S34: YES), the processor 43 determines whether an area into which the work machine 1 enters is the wireless area 110 (step S35). If the area into which the work machine 1 enters is not the wireless area 110 (step S35: NO), the processor 43 allows the work machine 1 to turn and continuously travel in the wire area 120 (step S36).

If the magnetic field of the boundary wire 2 is detected, the GNSS signal is received, and the area into which the work machine 1 enters is the wireless area 110 (step S33: YES, step S34: YES, step S35: YES), the processor 43 allows the work machine 1 to travel straight to the outside of the wire area 120 (step S37). Specifically, in Fig. 14, when the work machine 1 traveling straight in the overlapping area A2 detects the boundary wire 2 at a position P4, the GNSS sensor 51 receives the GNSS signal at the position P4. Since the processor 43 recognizes the self-position in the wireless area 110 based on the GNSS signal, the processor 43 can determine whether the area, into which the work machine 1 enters when traveling straight as it is, is within the non-overlapping area A1 of the wireless area 110, and here, determines that the area into which the work machine 1 enters is within the non-overlapping area A1. Then, the processor 43 allows the work machine 1 to travel straight to the outside of the wire area 120.

When the random travel mode is set as the travel mode, the work machine 1 randomly travels in the entire work area 100 including the wireless area 110 and the wire area 120, but the random travel mode when traveling in the non-overlapping area A1 of the wireless area 110 and the random travel mode when traveling in the wire area 120 have different conditions when moving between the non-overlapping area A1 and the wire area 120. Specifically, the random travel mode (also referred to as a "second travel mode") when traveling in the non-overlapping area A1 of the wireless area 110 is a mode that always permits the movement between the non-overlapping area A1 of the wireless area 110 and the overlapping area A2 (that is, the work machine travels straight as it is) when the outer peripheral edge of the wire area 120 is detected by the magnetic sensor 52. On the other hand, the random travel mode ("fourth travel mode") when traveling in the wire area 120 is a mode that determines whether the movement between the non-overlapping area A1 of the wireless area 110 and the overlapping area A2 is permitted based on the detection results of the GNSS sensor 51 and the magnetic sensor 52 when the outer peripheral edge of the wire area 120 is detected by the magnetic sensor 52. Specifically, as described above, in the fourth travel mode, if the magnetic field of the boundary wire 2 is detected, the GNSS signal is received, and the area into which the work machine 1 enters is the wireless area 110 (step S33: YES, step S34: YES, step S35: YES), the movement from the overlapping area A2 to the non-overlapping area A1 of the wireless area 110 is permitted. In addition, in the fourth travel mode, if the magnetic field of the boundary wire 2 is detected and the GNSS signal is not received (step S33: YES, step S34: NO), since the work machine 1 is located in the non-overlapping area A3 of the wire area 120, the work machine 1 is prohibited from moving to the outside of the wire area 120 and is turned.

In this way, even in the case where the random travel mode is set as the travel mode, the processor 43 transitions the travel mode from the second travel mode to the fourth travel mode when the work machine 1 moves from the wireless area 110 to the inside (overlapping area A2) of the wire area 120, and transitions the travel mode from the fourth travel mode to the second travel mode when the work machine 1 moves to the outside (non-overlapping area A1) of the wire area 120. The work machine 1 can smoothly transition the travel mode in accordance with the area recognition by the GNSS sensor 51 and the area recognition by the magnetic sensor 52.

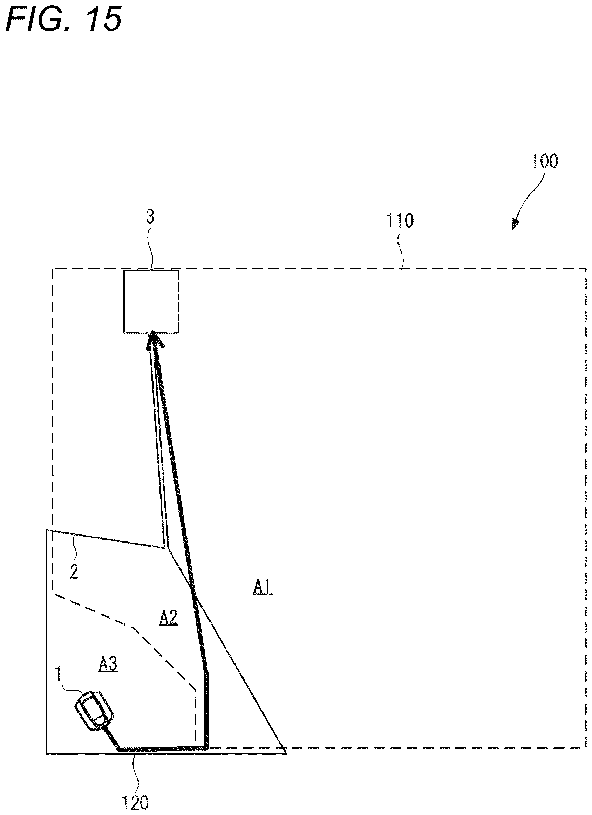

Fig. 15 illustrates a state in which remaining power of the battery 20 decreases while the work machine 1 is working in the work area 100, and the work machine 1 returns to the charging station 3 in the middle of the work. For example, when the remaining power of the battery 20 calculated based on the detection result of the voltage sensor 57 falls below a predetermined threshold, the processor 43 executes processing of stopping the work and moving the work machine 1 to the charging station 3.

In a case where the position of the work machine 1 when the remaining power of the battery 20 falls below the predetermined threshold is in the wireless area 110 (non-overlapping area A1 and overlapping area A2), since the processor 43 recognizes the wireless area 110 based on the detection result of the GNSS sensor 51, the processor 43 moves the work machine 1 to the charging station 3 based on the GNSS sensor 51.

On the other hand, as illustrated in Fig. 15, in a case where the position of the work machine 1 when the remaining power of the battery 20 falls below the predetermined threshold is in the non-overlapping area A3 of the wire area 120, since the GNSS sensor 51 does not receive the GNSS signal, the processor 43 moves the work machine 1 to the outer peripheral edge of the wire area 120 and allows the work machine 1 to travel along the outer peripheral edge of the wire area 120 after reaching the outer peripheral edge. The processor 43 allows the work machine 1 to travel along the outer peripheral edge of the wire area 120 until the GNSS sensor 51 can receive the GNSS signal. When the GNSS sensor 51 receives the GNSS signal, the processor 43 moves the work machine 1 to the charging station 3 based on the GNSS sensor 51. Since the boundary wire 2 is connected to the charging station 3, the processor 43 may move the work machine 1 to the charging station 3 along the boundary wire 2.

Here, as illustrated in Fig. 10, after the work machine 1 enters the wire area 120 and transitions from the parallel travel mode to the random travel mode, when the remaining power of the battery 20 falls below the predetermined threshold before the scheduled work time elapses, the processor 43 stops the work and stores the time of the work actually performed in the wire area 120 in the memory 42. Then, the processor 43 moves the work machine 1 to the charging station 3. When the work machine 1 works in the wire area 120 in the random travel mode again after the battery 20 is charged, the processor 43 allows the work machine 1 to work in the wire area 120 for the remaining scheduled work time. When the work in the wire area 120 is stopped to charge the battery 20, the processor 43 maintains the work completion flag OFF.

The control method by the work machine 1 described above can be implemented by executing a program prepared in advance by a computer, specifically, the processor 43. The program is stored in a computer-readable storage medium and executed by being read from the storage medium. In addition, the program may be provided in a form stored in a non-transitory storage medium such as a flash memory, or may be provided via a network.

### (Modification)

In the above-described embodiment, the work area 100 in which one boundary wire 2 is installed is illustrated, but a plurality of boundary wires 2 may be installed in the work area 100. That is, the system SYS includes the work machine 1 and the plurality of boundary wires 2.

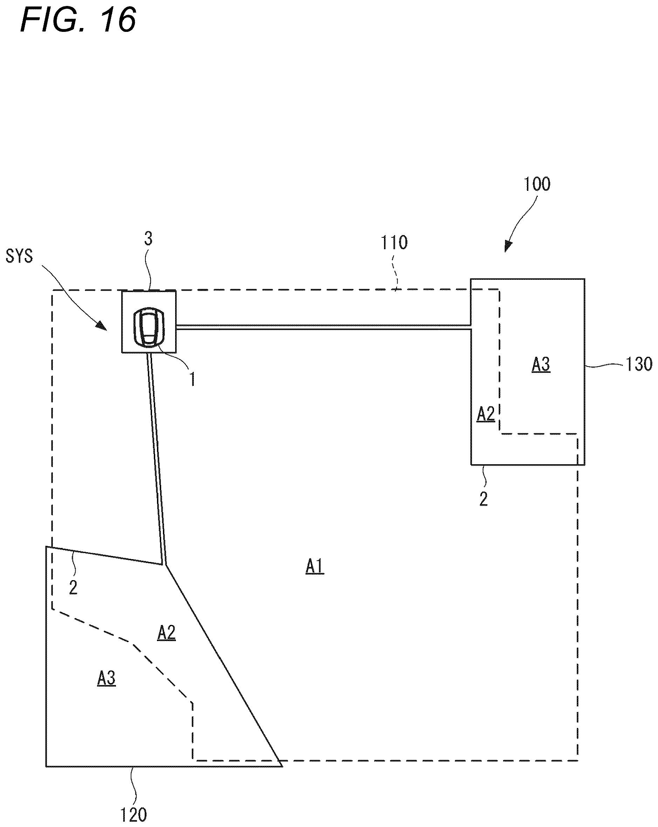

Fig. 16 illustrates the work area 100 in which two boundary wires 2 are installed. In the work area 100, two wire areas 120 and 130 are formed. Similarly to the wire area 120, the boundary wire 2 demarcating the wire area 130 is installed so as to partially overlap the wireless area 110. That is, the wire area 130 includes the overlapping area A2 and the non-overlapping area A3. The processing executed by the processor 43 when the work machine 1 moves from the non-overlapping area A1 of the wireless area 110 to the wire area 130 can be the same as the processing when the work machine 1 moves to the wire area 120, and the description thereof will be omitted.

The two boundary wires 2 each emit a unique signal (magnetic field), and the processor 43 of the work machine 1 is configured to identify the wire areas 120 and 130 demarcated by the boundary wires 2 based on the detection result of the magnetic sensor 52. Accordingly, the processor 43 can store, for example, the scheduled work time and the work completion flag described above in the memory 42 in association with each of the wire areas 120 and 130, and the work machine 1 can perform work corresponding to each of the wire areas 120 and 130.

Although the embodiment of the present disclosure has been described above with reference to the accompanying drawings, it is needless to say that the present disclosure is not limited to the embodiment. It is apparent to those skilled in the art that various changes or modifications can be conceived within the scope described in the claims, and it is understood that the changes or modifications naturally fall within the technical scope of the present disclosure. In addition, the constituent elements in the above embodiment may be freely combined without departing from the gist of the disclosure.

In the present description, at least the following matters are described. In the parentheses, the corresponding constituent elements and the like in the above embodiment are illustrated as examples, but the present disclosure is not limited thereto.
(1) A work machine (work machine 1) that autonomously travels in a work area (work area 100) in a plurality of travel modes to perform 52 work, the work machine including:
   a first detector (GNSS sensor 51);
   a second detector (magnetic sensor 52); and
   a processor (processor 4) configured to control autonomous travel and work of the work machine, which
   the processor is configured to recognize a first area (wireless area 110) in the work area based on a detection result of the first detector and recognize a second area (wire area 120, 130) in the work area based on a detection result of the second detector,
   the second area is an area (overlapping area) set to include an overlapping area partially overlapping the first area, and
   the processor is configured to cause the travel modes transition when the work machine moves between an outside and an inside of the second area.

According to (1), a part of the second area is set to overlap the first area, and thus, even when the work machine moves between the first area and the second area, the detection result of at least one of the first detector and the second detector is always acquired. Therefore, the work machine can stably recognize the entire work area, and can ascertain the self-position in the work area with high reliability. Further, since the processor transitions the travel mode when the work machine moves between the outside and the inside of the second area, the work machine can smoothly transition the travel mode in accordance with the area recognition by the first detector and the area recognition by the second detector.

(2) The work machine according to (1), in which,
when the work machine travels in a first travel mode (parallel travel mode) in a non-overlapping area (non-overlapping area A1) that does not overlap the second area in the first area and moves from the non-overlapping area of the first area to the overlapping area, the processor is configured to cause the travel mode transition to a third travel mode different from the first travel mode (random travel mode).

According to (2), the work machine can travel in the first travel mode in the non-overlapping area of the first area, and can transition to the third travel mode when entering the second area including the overlapping area.

(3) The work machine according to (2), in which
the processor is configured to
determine whether to move the work machine to the second area based on information (work completion flag) indicating whether work in the second area is completed when the work machine travels in the non-overlapping area of the first area in the first travel mode and the second detector detects an outer peripheral edge of the second area, and
move the work machine to the second area when the work in the second area has not been completed.

According to (3), it is possible to determine whether to move to the second area based on the information indicating whether the work in the second area is completed.

(4) The work machine according to (3), in which
the processor is configured to calculate a scheduled work time in the second area by allowing the work machine to travel along the outer peripheral edge of the second area when the work in the second area has not been completed.

According to (4), it is possible to calculate the scheduled work time related to the size of the second area before the work in the second area.

(5) The work machine according to (4), in which
the processor is configured to allow the work machine to travel along the outer peripheral edge of the second area and then allow the work machine to work in the second area for the scheduled work time in the third travel mode.

According to (5), it is possible to appropriately perform the work in the second area based on the scheduled work time calculated by traveling along the outer peripheral edge of the second area.

(6) The work machine according to (5), in which
the processor is configured to permit the work machine to move from the overlapping area to the non-overlapping area of the first area in a case where a position of the work machine when the scheduled work time has elapsed is in the overlapping area.

According to (6), in the case where the position of the work machine when the scheduled work time has elapsed is in the overlapping area, the processor can recognize the first area based on the first detector, and thus the work machine can move from the overlapping area to the non-overlapping area of the first area.

(7) The work machine according to (5) or (6), in which
the processor is configured to
allow the work machine to travel along the outer peripheral edge of the second area in a case where a position of the work machine when the scheduled work time has elapsed is in a non-overlapping area (non-overlapping area A3) that does not overlap the first area in the second area, and
permit the work machine to move from the overlapping area to the non-overlapping area of the first area when the work machine travels to the overlapping area along the outer peripheral edge and recognizes the first area based on the detection result of the first detector.

According to (7), even in the case where the position of the work machine when the scheduled work time has elapsed is in the non-overlapping area of the second area, the processor allows the work machine to travel to the overlapping area along the outer peripheral edge of the second area, and thus the work machine can move from the overlapping area to the non-overlapping area of the first area.

(8) The work machine according to any one of (2) to (7), in which
the first travel mode is a mode (parallel travel mode) in which the work machine travels regularly, and
the third travel mode is a mode (random travel mode) in which the work machine travels randomly.

According to (8), the work machine can travel in the work area in the first travel mode and the third travel mode in accordance with the area recognition by the first detector and the area recognition by the second detector, respectively, by the transition of the travel mode by the processor.

(9) The work machine according to any one of (1) to (8), in which
the processor is configured to cause the travel mode transition to a fourth travel mode different from a second travel mode when the work machine travels in the second travel mode in a non-overlapping area (non-overlapping area A1) that does not overlap the second area in the first area and moves from the non-overlapping area of the first area to the overlapping area,
the second travel mode is a mode in which the work machine travels randomly, and is a mode that movement between the non-overlapping area of the first area and the overlapping area is always permitted when the second detector detects an outer peripheral edge of the second area, and
the fourth travel mode is a mode in which the work machine travels randomly, and is a mode that the processor is configured to determine whether the movement between the overlapping area and the non-overlapping area of the first area is permitted based on detection results of the first detector and the second detector when the second detector detects the outer peripheral edge of the second area.

According to (9), the work machine can travel in the work area in the second travel mode and the fourth travel mode in accordance with the area recognition by the first detector and the area recognition by the second detector, respectively, by the transition of the travel mode by the processor.

(10) The work machine according to (9), in which
in the fourth travel mode,
when the second detector detects the outer peripheral edge of the second area, when the work machine is located in the overlapping area, and when an area the work machine enters is the first area, movement from the overlapping area to the non-overlapping area of the first area is permitted, and
when the second detector detects the outer peripheral edge of the second area, and when the work machine is located in the non-overlapping area of the second area, movement to an outside of the second area is prohibited.

According to (10), the fourth travel mode enables highly reliable work to be performed in the second area.

(11) The work machine according to any one of (1) to (10), in which
the first detector is a sensor configured to receive a Global Navigation Satellite System (GNSS) signal, and
the second detector is a sensor configured to detect a signal emitted from the second area.

According to (11), even when an area in which the reception sensitivity of the GNSS signal is low or zero is included in the work area, since a part of the second area is set to overlap the first area, the work machine can stably recognize the entire work area, and can ascertain the self-position in the work area with high reliability.

(12) The work machine according to any one of (1) to (11), in which
the work area includes a plurality of second areas, and
the processor is configured to identify each of the second areas based on a detection result of the second detector.

According to (12), the work machine can perform work corresponding to each of the plurality of second areas.

(13) A program for causing a work machine to execute a process, the work machine including a first detector and a second detector to autonomously travel in a work area in a plurality of travel modes to perform work, the work machine configured to recognize a first area in the work area based on a detection result of the first detector and to recognize at least one second area in the work area based on a detection result of the second detector, the second area being an area set to include an overlapping area partially overlapping the first area, the process including:
causing the travel modes to transition when the work machine moves between an outside and an inside of the second area.

According to (13), a part of the second area is set to overlap the first area, and thus, even when the work machine moves between the first area and the second area, the detection result of at least one of the first detector and the second detector is always acquired. Therefore, the work machine can stably recognize the entire work area, and can ascertain the self-position in the work area with high reliability. Further, by the transition of the travel mode by the processor, the work machine can smoothly transition the travel mode in accordance with the area recognition by the first detector and the area recognition by the second detector.

(14) A system (system SYS) including:
a work machine configured to autonomously travel in a work area to perform work; and
at least one area demarcator (boundary wire 2) configured to demarcate a part of the work area, in which
the work machine includes a first detector configured to receive a GNSS signal, a second detector configured to detect a signal emitted by the at least one area demarcators, and a processor configured to control autonomous travel and work of the work machine, and
the at least one area demarcator is installed to demarcate an area including an area (non-overlapping area A3) in the work area in which the GNSS signal is difficult to be received by the first detector and a part of an area (overlapping area A2) in the work area in which the GNSS signal is receivable by the first detector.

According to (14), since the area demarcator is installed to demarcate the area including the area in which the GNSS signal is difficult to be received in the work area and a part of the area in which the GNSS signal can be received in the work area, even when the work machine moves between the first area and the second area, the detection result of at least one of the first detector and the second detector is always acquired. Therefore, the work machine can stably recognize the entire work area, and can ascertain the self-position in the work area with high reliability.

(15) The system according to (14), in which
at least one area demarcator includes a plurality of area demarcators,
each of the plurality of area demarcators emits a unique signal, and
the processor is configured to identify an area demarcated by each of the area demarcators based on a detection result of the second detector.

According to (15), the work machine can perform work corresponding to each of the plurality of second areas.

## Claims

1. A work machine that autonomously travels in a work area in a plurality of travel modes to perform work, the work machine comprising:
a first detector;
a second detector; and
a processor configured to control autonomous travel and work of the work machine, wherein
the processor is configured to recognize a first area in the work area based on a detection result of the first detector and recognize a second area in the work area based on a detection result of the second detector,
the second area is an area set to include an overlapping area partially overlapping the first area, and
the processor is configured to cause the travel modes transition when the work machine moves between an outside and an inside of the second area.

2. The work machine according to claim 1, wherein,
when the work machine travels in a first travel mode in a non-overlapping area that does not overlap the second area in the first area and moves from the non-overlapping area of the first area to the overlapping area, the processor is configured to cause the travel mode transition to a third travel mode different from the first travel mode.

3. The work machine according to claim 2, wherein
the processor is configured to
determine whether to move the work machine to the second area based on information indicating whether work in the second area is completed when the work machine travels in the non-overlapping area of the first area in the first travel mode and the second detector detects an outer peripheral edge of the second area, and
move the work machine to the second area when the work in the second area has not been completed.

4. The work machine according to claim 3, wherein
the processor is configured to calculate a scheduled work time in the second area by allowing the work machine to travel along the outer peripheral edge of the second area when the work in the second area has not been completed.

5. The work machine according to claim 4, wherein
the processor is configured to allow the work machine to travel along the outer peripheral edge of the second area and then allow the work machine to work in the second area for the scheduled work time in the third travel mode.

6. The work machine according to claim 5, wherein
the processor is configured to permit the work machine to move from the overlapping area to the non-overlapping area of the first area in a case where a position of the work machine when the scheduled work time has elapsed is in the overlapping area.

7. The work machine according to claim 5 or 6, wherein
the processor is configured to
allow the work machine to travel along the outer peripheral edge of the second area in a case where a position of the work machine when the scheduled work time has elapsed is in a non-overlapping area that does not overlap the first area in the second area, and
permit the work machine to move from the overlapping area to the non-overlapping area of the first area when the work machine travels to the overlapping area along the outer peripheral edge and recognizes the first area based on the detection result of the first detector.

8. The work machine according to any one of claims 2 to 7, wherein
the first travel mode is a mode in which the work machine travels regularly, and
the third travel mode is a mode in which the work machine travels randomly.

9. The work machine according to any one of claims 1 to 8, wherein
the processor is configured to cause the travel mode transition to a fourth travel mode different from a second travel mode when the work machine travels in the second travel mode in a non-overlapping area that does not overlap the second area in the first area and moves from the non-overlapping area of the first area to the overlapping area,
the second travel mode is a mode in which the work machine travels randomly, and is a mode that movement between the non-overlapping area of the first area and the overlapping area is always permitted when the second detector detects an outer peripheral edge of the second area, and
the fourth travel mode is a mode in which the work machine travels randomly, and is a mode that the processor is configured to determine whether the movement between the overlapping area and the non-overlapping area of the first area is permitted based on detection results of the first detector and the second detector when the second detector detects the outer peripheral edge of the second area.

10. The work machine according to claim 9, wherein
in the fourth travel mode,
when the second detector detects the outer peripheral edge of the second area, when the work machine is located in the overlapping area, and when an area the work machine enters is the first area, movement from the overlapping area to the non-overlapping area of the first area is permitted, and
when the second detector detects the outer peripheral edge of the second area, and when the work machine is located in the non-overlapping area of the second area, movement to an outside of the second area is prohibited.

11. The work machine according to any one of claims 1 to 10, wherein
the first detector is a sensor configured to receive a Global Navigation Satellite System (GNSS) signal, and
the second detector is a sensor configured to detect a signal emitted from the second area.

12. The work machine according to any one of claims 1 to 11, wherein
the work area includes a plurality of second areas, and
the processor is configured to identify each of the second areas based on a detection result of the second detector.

13. A program for causing a work machine to execute a process, the work machine including a first detector and a second detector to autonomously travel in a work area in a plurality of travel modes to perform work, the work machine configured to recognize a first area in the work area based on a detection result of the first detector and to recognize at least one second area in the work area based on a detection result of the second detector, the second area being an area set to include an overlapping area partially overlapping the first area, the process comprising:
causing the travel modes to transition when the work machine moves between an outside and an inside of the second area.

14. A system comprising:
a work machine configured to autonomously travel in a work area to perform work; and
at least one area demarcator configured to demarcate a part of the work area, wherein
the work machine includes a first detector configured to receive a GNSS signal, a second detector configured to detect a signal emitted by the at least one area demarcators, and a processor configured to control autonomous travel and work of the work machine, and
the at least one area demarcator is installed to demarcate an area including an area in the work area in which the GNSS signal is difficult to be received by the first detector and a part of an area in the work area in which the GNSS signal is receivable by the first detector.

15. The system according to claim 14, wherein
at least one area demarcator includes a plurality of area demarcators,
each of the plurality of area demarcators emits a unique signal, and
the processor is configured to identify an area demarcated by each of the area demarcators based on a detection result of the second detector.
